# EUROPEAN PATENT SPECIFICATION

(11) **EP 3 347 170 B1**
(45) Date of publication and mention of the grant of the patent: **10.01.2024**
(21) Application number: 16770899.9
(22) Date of filing: 07.09.2016
(51) Int. Cl.: B25J 9/16, B25J 9/04, B25J 9/00

(54) **ASSEMBLY SYSTEM AND METHOD FOR INSERTING A TERMINAL INTO A HOUSING**
MONTAGESYSTEM UND VERFAHREN ZUM EINSETZEN EINES ENDGERÄTS IN EIN GEHÄUSE
SYSTÈME ET PROCÉDÉ D'ASSEMBLAGE POUR L'INSERTION D'UNE BORNE DANS UN BOÎTIER

(30) Priority: 07.09.2015 CN 201510561544
(43) Date of publication of application: 18.07.2018
(73) Proprietor: Tyco Electronics (Shanghai) Co. Ltd., Shanghai 200131 (CN); TE Connectivity Solutions GmbH, 8200 Schaffhausen (CH)
(72) Inventor: DENG, Yingcong, Shanghai (CN); HU, Lvhai, Shanghai (CN); ZHANG, Dandan, Shanghai (CN); LU, Roberto Francisco-Yi, Berwyn, Pennsylvania 19312 (US); YASSER, Eldeeb, Berwyn, Pennsylvania 19312 (US)
(74) Representative: Grünecker Patent- und Rechtsanwälte PartG mbB
(86) International application number: PCT/EP2016/071070
(87) International publication number: WO 2017/042205

(56) References cited:
- EP-A2- 2 743 040
- CN-B- 102 357 880
- US-A- 4 779 334
- US-A- 5 414 925
- US-A- 6 047 610
- Hai Yang ET AL: "On the Design of Mobile Parallel Robots for Large Workspace Applications", ASMEN/A, 29 August 2011 (2011-08-29), XP055322625, Retrieved from the Internet: URL:https://hal.archives-ouvertes.fr/file/ index/docid/641623/filename/IDETC2011_On_t he_Design_of_Mobile_Parallel_Robots_for_La rge_Workspace_Applications.pdf [retrieved on 2016-11-24]
- HAI YANG ET AL: "Locomotion approach of REMORA: A reonfigurable mobile robot for manufacturing Applications", INTELLIGENT ROBOTS AND SYSTEMS (IROS), 2011 IEEE/RSJ INTERNATIONAL CONFERENCE ON, IEEE, 25 September 2011 (2011-09-25), pages 5067-5072, XP032060520, DOI: 10.1109/IROS.2011.6048538 ISBN: 978-1-61284-454-1
- PALPACELLI MATTEO ET AL: "A lockable spherical joint for robotic applications", 2014 IEEE/ASME 10TH INTERNATIONAL CONFERENCE ON MECHATRONIC AND EMBEDDED SYSTEMS AND APPLICATIONS (MESA), IEEE, 10 September 2014 (2014-09-10), pages 1-6, XP032669615, DOI: 10.1109/MESA.2014.6935581 [retrieved on 2014-10-24]
- Shijun Yan: "A SERIAL-PARALLEL HYBRID ROBOT FOR MACHINING OF COMPLEX SURFACES", , 1 September 2015 (2015-09-01), XP055967915, Retrieved from the Internet: URL:https://core.ac.uk/download/pdf/488111 66.pdf [retrieved on 2022-10-04]

## Description

### BACKGROUND OF THE INVENTION

### Field of the Invention

The present invention relates to an assembly system and an assembly method adapted to insert a terminal into a housing, more particularly, relates to a programmable automatic assembly system and a programmable automatic assembly method adapted to insert a terminal into a housing by means of a robot mechanism.

### Description of the Related Art

Because a robot(s) may rapidly and accurately realize the assembly of micro parts, in the prior art, the assembly of a product is usually completed by use of a plurality of serial robots. For example, by the cooperation of two serial robots, a terminal may be inserted into a housing to form an electrical device, for example, a connector.

In the prior art, in order to insert a first member into a second member by use of two serial robots, firstly, a first serial robot grips the first member, a second serial robot grips the second member; then, the first serial robot moves the first member relative to the second serial robot, so as to insert the first member into the second member. This assembly solution has no problem in a case where an insertion force required for inserting the first member into the second member is small. However, since the serial robot has low rigid and cannot bear a large operation force, if the insertion force required for inserting the first member into the second member is large, the position accuracy of the serial robot is difficult to control, which may reduce the assembly precision. For example, in a case where a terminal is inserted into a housing in an interference fitting manner, a large insertion force is required. In this case, if the large insertion force is directly exerted on end effectors of the two serial robots, the two serial robots will not be able to reliably maintain the relative position between the terminal and the housing, which will reduce the assembly precision of the terminal in the housing.

US 4 779 334 A discloses a terminal inserting apparatus comprising first and second sets of closeable jaws. The second set of jaws are arranged between the first set of jaws and the cavity in the connector into which the terminal is to be inserted. The jaws are aligned juxtaposed to one another and are moveable relative to each other to spaced-apart positions. The first set of jaws closes onto the wire between the wire and the terminal. The second set of jaws closes, holding the terminal of the wire in place and thereby enabling the first set of jaws to insert the terminal into the cavity.

### SUMMARY OF THE INVENTION

The present invention has been made to overcome or alleviate at least one aspect of the above mentioned disadvantages.

According to an object of the present invention, there is provided an assembly system and an assembly method that may insert a terminal into a housing with high precision.

According to an aspect of the present invention, there is provided an assembly system, adapted to insert a terminal into a housing, comprising: a parallel robot mechanism having a support platform on which the housing is held; a serial robot mechanism having an end effector, wherein the end effector is connected to the support platform, so as to drive the parallel robot mechanism to move; and an insertion mechanism configured to insert the terminal into the housing held on the support platform. The parallel robot mechanism is moved by the serial robot mechanism until an insertion hole in the housing is aligned with the terminal to be inserted before inserting the terminal into the housing. The parallel robot mechanism and the support platform are kept stationary by locking at least a part of joints of the parallel robot mechanism during inserting the terminal into the housing.

According to an exemplary embodiment of the present invention, the parallel robot mechanism has multiple degrees of freedom.

According to another exemplary embodiment of the present invention, the parallel robot mechanism is configured to be movable in at least one of a first direction, a second direction and a third direction that are perpendicular to each other.

According to another exemplary embodiment of the present invention, the parallel robot mechanism is further configured to be rotatable about at least one of the first direction, the second direction and the third direction.

According to another exemplary embodiment of the present invention, the serial robot mechanism has multiple degrees of freedom.

According to another exemplary embodiment of the present invention, the serial robot mechanism is configured to be a multi-axis robot.

According to another exemplary embodiment of the present invention, the assembly system further comprises: a transmission mechanism adapted to transmit a terminal material strip to the insertion mechanism; and a cutting mechanism adapted to cut the terminal out of the terminal material strip, which is transmitted to the insertion mechanism.

According to another exemplary embodiment of the present invention, the insertion mechanism comprises a manipulator adapted to grip the terminal cut out of the terminal material strip and insert the gripped terminal into the insertion hole of the housing.

According to another exemplary embodiment of the present invention, the insertion mechanism comprises: a fixture adapted to clamp the terminal to be inserted; and a moving mechanism adapted to insert the clamped terminal into the insertion hole of the housing.

According to another exemplary embodiment of the present invention, the insertion mechanism comprises an injection mechanism adapted to inject the terminal into the insertion hole of the housing.

According to another aspect of the present invention, there is provided a method of assembling a terminal into a housing, comprising steps of:
S100: providing the assembly system as mentioned in any one of above embodiments;
S200: holding the housing on the support platform of the parallel robot mechanism;
S300: holding the terminal to be inserted on the insertion mechanism;
S400: moving the parallel robot mechanism by the serial robot mechanism until the insertion hole in the housing is aligned with the terminal to be inserted;
S500: locking at least a part of joints of the parallel robot mechanism, so that the parallel robot mechanism and the support platform are kept stationary; and
S600: inserting the terminal into the insertion hole of the housing by means of the insertion mechanism.

According to an exemplary embodiment of the present invention, a plurality of terminals are to be inserted into respective insertion holes of the housing, and the method further comprises steps of:
S700: unlocking the at least a part of joints of the parallel robot mechanism, so that the parallel robot mechanism and the support platform are movable; and
S800: repeating the steps S300 to S700 until the plurality of terminals are inserted into the housing.

In the above various exemplary embodiments of the present invention, the parallel robot mechanism and the support platform are kept stationary by locking at least a part of joints of the parallel robot mechanism during inserting the terminal into the housing. Thereby, an insertion force required for inserting the terminal into the housing is completely exerted on and then borne by the parallel robot mechanism with high rigid, without being exerted on the serial robot mechanism with low rigid. Thereby, it ensures the position accuracy of the serial robot mechanism. Since the parallel robot mechanism has high rigid and may bear large operation force, even if the insertion force required for inserting the terminal into the housing is very large, the position accuracy of the parallel robot mechanism will not be negative effected, improving the assembly precision of the terminal in the housing.

### BRIEF DESCRIPTION OF THE DRAWINGS

The above and other features of the present invention will become more apparent by describing in detail exemplary embodiments thereof with reference to the accompanying drawings, in which:

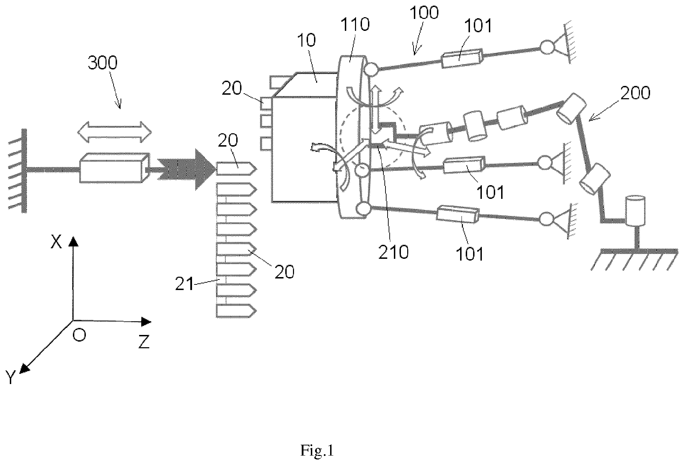

Fig.1 is an illustrative principle view of an assembly system according to an exemplary embodiment of the present invention.

### DETAILED DESCRIPTION OF PREFERRED EMBODIMENTS OF THE

### IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an assembly system, adapted to insert a terminal into a housing, comprising: a parallel robot mechanism having a support platform on which the housing is held; a serial robot mechanism having an end effector mounted thereon, wherein the end effector is connected to the support platform, so as to drive the parallel robot mechanism to move; and an insertion mechanism configured to insert the terminal into the housing held on the support platform, wherein the parallel robot mechanism is moved by the serial robot mechanism until an insertion hole in the housing is aligned to the terminal to be inserted before inserting the terminal into the housing, and wherein the parallel robot mechanism and the support platform are kept stationary by locking at least a part of joints of the parallel robot mechanism during inserting the terminal into the housing.

Fig.1 is an illustrative view of an assembly system according to an exemplary embodiment of the present invention.

As shown in Fig. 1, the assembly system is adapted to insert a terminal 20 into a housing 10 to form an electrical device. For example, during assembling a connector, there is a need to insert a metal terminal into an insulation housing.

As shown in Fig.1 in an embodiment, the assembly system mainly comprises a parallel robot mechanism 100, a serial robot mechanism 200 and an insertion mechanism 300.

As shown in Fig.1 in an embodiment, the parallel robot mechanism 100 has a support platform 110. The housing 10 is fixed and held on the support platform 110. In this way, the housing 10 may be moved with the support platform 110. An end effector 210 is mounted on the serial robot mechanism 200. The end effector 210 is connected to the support platform 110, so as to drive the parallel robot mechanism 100 to move. The insertion mechanism 300 is configured to insert the terminal 20 into the housing 10 held on the support platform 110.

In an embodiment, the parallel robot mechanism 100 is moved by the serial robot mechanism 200 until an insertion hole (not shown) in the housing 10 is aligned with the terminal 20 to be inserted before inserting the terminal 20 into the housing 10. The parallel robot mechanism 100 and the support platform 110 are kept stationary by locking at least a part of joints 101 of the parallel robot mechanism 100 during inserting the terminal 20 into the housing 10. In this way, an insertion force required for inserting the terminal 20 into the housing 10 is completely exerted on and then borne by the parallel robot mechanism 100 with high rigid, other than exerted on the serial robot mechanism 200 with low rigid. Thereby, it ensures the position accuracy of the serial robot mechanism 200, improving the assembly precision of the terminal 20 in the housing.

In an embodiment, the parallel robot mechanism 100 may have multiple degrees of freedom.

In an embodiment, as shown in Fig.1, the parallel robot mechanism 100 is configured to be movable in at least one of a first direction X, a second direction Y and a third direction Z that are perpendicular to each other.

In an embodiment, as shown in Fig.1, the parallel robot mechanism 100 is further configured to be rotatable about at least one of the first direction X, the second direction Y and the third direction Z.

In an embodiment, the serial robot mechanism 200 may have multiple degrees of freedom.

In an embodiment, as shown in Fig.1, the serial robot mechanism 200 is configured to be a multi-axis robot. In the illustrated embodiment, the serial robot mechanism 200 is a six-axis robot. But the present invention is not limited to this, the serial robot mechanism may be a four-axis or five-axis robot.

In an embodiment, as shown in Fig.1, the assembly system may further comprises a transmission mechanism (not shown) and a cutting mechanism (not shown). The transmission mechanism is adapted to transmit a terminal material strip 21 to the insertion mechanism 300. The cutting mechanism is adapted to cut the terminal 20 out of the terminal material strip 21, which has been transmitted to the insertion mechanism 300.

In an embodiment of the present invention, the insertion mechanism 300 may comprise a manipulator adapted to grip the terminal 20 cut out of the terminal material strip 21 and insert the gripped terminal 20 into the insertion hole of the housing 10.

In another embodiment of the present invention, the insertion mechanism 300 may comprise a fixture and a moving mechanism. The fixture is adapted to clamp the terminal 20 to be inserted. The moving mechanism is adapted to insert the clamped terminal 20 into the insertion hole of the housing 10.

In another embodiment of the present invention, the insertion mechanism 300 may comprise an injection mechanism adapted to inject the terminal 20 into the insertion hole of the housing 10.

Although it has described several different insertion mechanisms, the present invention is not limited to this, the insertion mechanism may be any one of insertion mechanisms adapted to insert the terminal into the housing in the prior art, for example, the insertion mechanism may be a multi-axis robot.

Hereafter, it will describe in detail a process of inserting the terminal 20 into the housing 10 according to an exemplary embodiment of the present invention with reference to Fig. 1.

Firstly, as shown in Fig. 1, the housing 10 is mounted and held on the support platform 110 of the parallel robot mechanism 100. In an embodiment, the housing 10 may be directly fixed on the support platform 110 or fixed by a fixture mounted on the support platform 110.

Then, the terminal material strip 21 is fed to the insertion mechanism 300 by the transmission mechanism (not shown).

Then, the terminal 20 is cut out of the terminal material strip 21 by the cutting mechanism (not shown).

Then, the cut terminal 20 is held to be inserted on the insertion mechanism 300.

Then, the parallel robot mechanism 100 is driven to move by the serial robot mechanism 200 until the insertion hole in the housing 10 is aligned with the terminal 20 to be inserted.

Then, at least a part of joints 101 (for example, all active joints) of the parallel robot mechanism 100 is locked, so that the parallel robot mechanism 100 and the support platform 110 are kept stationary.

Then, the terminal 20 is inserted into the insertion hole of the housing 10 by means of the insertion mechanism 300.

In this way, the operation of inserting the terminal 20 into the housing 10 is finished.

In an embodiment, it needs to insert a plurality of terminals 20 into respective insertion holes of the housing 10. In this case, after the first terminal 20 is inserted into the housing 10, it needs to unlock the at least a part of joints 101 of the parallel robot mechanism 100, so that the parallel robot mechanism 100 and the support platform 110 are movable again. Then, the above process may be repeated until the plurality of terminals 20 are inserted into the housing 10.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. An assembly system, adapted to insert a terminal (20) into a housing (10), comprising:
a parallel robot mechanism (100) having a support platform (110) on which the housing (10) is held;
a serial robot mechanism (200) having an end effector (210), the end effector (210) being connected to the support platform (110) to drive the parallel robot mechanism (100) to move; and
an insertion mechanism (300) configured to insert the terminal (20) into the housing (10) held on the support platform (110),
wherein the parallel robot mechanism (100) is moved by the serial robot mechanism (200) until an insertion hole in the housing (10) is aligned with the terminal (20) to be inserted before inserting the terminal (20) into the housing (10), and
wherein the parallel robot mechanism (100) and the support platform (110) are kept stationary by locking at least a part of joints (101) of the parallel robot mechanism (100) during inserting the terminal (20) into the housing (10).

2. The assembly system according to claim 1, wherein the parallel robot mechanism (100) has multiple degrees of freedom.

3. The assembly system according to claim 2,
wherein the parallel robot mechanism (100) is configured to be movable in at least one of a first direction (X), a second direction (Y) and a third direction (Z) that are perpendicular to each other.

4. The assembly system according to claim 3,
wherein the parallel robot mechanism (100) is further configured to be rotatable about at least one of the first direction (X), the second direction (Y) and the third direction (Z).

5. The assembly system according to claim 4, wherein the serial robot mechanism (200) has multiple degrees of freedom.

6. The assembly system according to claim 5, wherein the serial robot mechanism (200) is configured to be a multi-axis robot.

7. The assembly system according to claim 1, further comprising:
a transmission mechanism adapted to transmit a terminal material strip (21) to the insertion mechanism (300); and
a cutting mechanism adapted to cut the terminal (20) out of the terminal material strip (21), which is transmitted to the insertion mechanism (300).

8. The assembly system according to claim 7,
wherein the insertion mechanism (300) comprises a manipulator adapted to grip the terminal (20) cut out of the terminal material strip (21) and insert the gripped terminal (20) into the insertion hole of the housing (10).

9. The assembly system according to claim 7, wherein the insertion mechanism (300) comprises:
a fixture adapted to clamp the terminal (20) to be inserted; and
a moving mechanism adapted to insert the clamped terminal (20) into the insertion hole of the housing (10).

10. The assembly system according to claim 7,
wherein the insertion mechanism (300) comprises an injection mechanism adapted to inject the terminal (20) into the insertion hole of the housing (10).

11. A method of assembling a terminal into a housing, comprising steps of:
S100: providing an assembly system according to claim 1;
S200: holding the housing (10) on the support platform (110) of the parallel robot mechanism (100);
S300: holding the terminal (20) to be inserted on the insertion mechanism (300);
S400: moving the parallel robot mechanism (100) by the serial robot mechanism (200) until the insertion hole in the housing (10) is aligned with the terminal (20) to be inserted;
S500: locking at least a part of joints (101) of the parallel robot mechanism (100), so that the parallel robot mechanism (100) and the support platform (110) are kept stationary; and
S600: inserting the terminal (20) into the insertion hole of the housing (10) by means of the insertion mechanism (300).

12. The method according to claim 11,
wherein a plurality of terminals (20) are to be inserted into respective insertion holes of the housing (10), and
wherein the method further comprises steps of:
S700: unlocking the at least a part of joints (101) of the parallel robot mechanism (100), so that the parallel robot mechanism (100) and the support platform (110) are movable; and
S800: repeating the steps S300 to S700 until the plurality of terminals (20) are inserted into the housing (10).

## Patentansprüche

1. Ein Montagesystem zum Einsetzen eines Terminals (20) in ein Gehäuse (10), umfassend:
einen parallelen Robotermechanismus (100) mit einer Trägerplattform (110), auf der das Gehäuse (10) gehalten wird;
einen seriellen Robotermechanismus (200) mit einem Endeffektor (210), wobei der Endeffektor (210) mit der Trägerplattform (110) verbunden ist, um den parallelen Robotermechanismus (100) zu bewegen; und
einen Einführungsmechanismus (300), der so konfiguriert ist, dass er das Terminal (20) in das auf der Trägerplattform (110) gehaltene Gehäuse (10) einführt,
wobei der parallele Robotermechanismus (100) durch den seriellen Robotermechanismus (200) bewegt wird, bis ein Einführungsloch in dem Gehäuse (10) mit dem einzuführenden Terminal (20) ausgerichtet ist, bevor das Terminal (20) in das Gehäuse (10) eingeführt wird, und
wobei der parallele Robotermechanismus (100) und die Trägerplattform (110) stationär gehalten werden, indem zumindest ein Teil der Gelenke (101) des parallelen Robotermechanismus (100) während des Einsetzens des Terminals (20) in das Gehäuse (10) verriegelt wird.

2. Das Montagesystem nach Anspruch 1, wobei der parallele Robotermechanismus (100) mehrere Freiheitsgrade aufweist.

3. Das Montagesystem nach Anspruch 2,
wobei der parallele Robotermechanismus (100) so konfiguriert ist, dass er in mindestens eine von einer ersten Richtung (X), einer zweiten Richtung (Y) und einer dritten Richtung (Z), die senkrecht zueinander stehen, bewegt werden kann.

4. Das Montagesystem nach Anspruch 3,
wobei der parallele Robotermechanismus (100) ferner so konfiguriert ist, dass er um mindestens eine der ersten Richtung (X), der zweiten Richtung (Y) und der dritten Richtung (Z) drehbar ist.

5. Das Montagesystem nach Anspruch 4, wobei der serielle Robotermechanismus (200) mehrere Freiheitsgrade aufweist.

6. Das Montagesystem nach Anspruch 5, wobei der serielle Robotermechanismus (200) als Mehrachsenroboter konfiguriert ist.

7. Das Montagesystem nach Anspruch 1, ferner umfassend:
einen Übertragungsmechanismus zum Übertragen eines Terminalmaterialstreifens (21) an den Einführungsmechanismus (300); und
einen Schneidemechanismus, der dazu geeignet ist, das Terminal (20) aus dem Terminalmaterialstreifen (21) auszuschneiden, der an den Einsetzmechanismus (300) übertragen wird.

8. Das Montagesystem nach Anspruch 7,
wobei der Einführungsmechanismus (300) einen Manipulator umfasst, der geeignet ist, das aus dem Terminalmaterialstreifen (21) ausgeschnittene Terminal (20) zu greifen und das gegriffene Terminal (20) in das Einsetzloch des Gehäuses (10) einzusetzen.

9. Das Montagesystem nach Anspruch 7, wobei der Einführungsmechanismus (300) umfasst:
eine Halterung zum Einklemmen des einzuführenden Terminals (20); und
einen Bewegungsmechanismus, der dazu geeignet ist, das eingeklemmte Terminal (20) in das Einführungsloch des Gehäuses (10) einzuführen.

10. Das Montagesystem nach Anspruch 7,
wobei der Einführungsmechanismus (300) einen Injektionsmechanismus umfasst, der zum Einführen des Terminals (20) in das Einführungsloch des Gehäuses (10) geeignet ist.

11. Ein Verfahren zum Einbau eines Terminals in ein Gehäuse, umfassend die folgenden Schritte:
S100: Bereitstellen eines Montagesystems nach Anspruch 1;
S200: Halten des Gehäuses (10) auf der Trägerplattform (110) des parallelen Robotermechanismus (100);
S300: Halten des einzuführenden Terminals (20) auf dem Einführungsmechanismus (300);
S400: Bewegen des parallelen Robotermechanismus (100) durch den seriellen Robotermechanismus (200), bis das Einführungsloch im Gehäuse (10) mit dem einzuführenden Terminal (20) ausgerichtet ist;
S500: Verriegeln mindestens eines Teils der Gelenke (101) des parallelen Robotermechanismus (100), so dass der parallele Robotermechanismus (100) und die Trägerplattform (110) stationär gehalten werden; und
S600: Einführen des Terminals (20) in das Einführungsloch des Gehäuses (10) mit Hilfe des Einführungsmechanismus (300).

12. Das Verfahren nach Anspruch 11,
wobei eine Vielzahl von Terminals (20) in entsprechende Einführungslöcher des Gehäuses (10) einzuführen sind, und
wobei das Verfahren ferner die folgenden Schritte umfasst:
S700: Entriegeln von mindestens einem Teil der Gelenke (101) des parallelen Robotermechanismus (100), so dass der parallele Robotermechanismus (100) und die Trägerplattform (110) beweglich sind; und
S800: Wiederholen der Schritte S300 bis S700, bis die Vielzahl von Terminals (20) in das Gehäuse (10) eingesetzt sind.

## Revendications

1. Système d'assemblage, conçu pour insérer une borne (20) dans un boîtier (10), comprenant :
un mécanisme de robot parallèle (100) comportant une plate-forme de support (110) sur laquelle le boîtier (10) est maintenu ;
un mécanisme robotique en série (200) comportant un effecteur final (210), l'effecteur final (210) étant relié à la plate-forme de support (110) pour entraîner le déplacement du mécanisme robotique parallèle (100) ; et
un mécanisme d'insertion (300) configuré pour insérer la borne (20) dans le boîtier (10) maintenu sur la plate-forme de support (110),
le mécanisme de robot parallèle (100) est déplacé par le mécanisme de robot en série (200) jusqu'à ce qu'un trou d'insertion dans le boîtier (10) soit aligné avec la borne (20) à insérer avant d'insérer la borne (20) dans le boîtier (10), et
dans lequel le mécanisme de robot parallèle (100) et la plate-forme de support (110) sont maintenus immobiles en bloquant au moins une partie des articulations (101) du mécanisme de robot parallèle (100) lors de l'insertion de la borne (20) dans le boîtier (10).

2. Système d'assemblage selon la revendication 1, dans lequel le mécanisme du robot parallèle (100) présente plusieurs degrés de liberté.

3. Système d'assemblage selon la revendication 2,
dans lequel le mécanisme de robot parallèle (100) est configuré pour se déplacer dans au moins une première direction (X), une deuxième direction (Y) et une troisième direction (Z) qui sont perpendiculaires l'une à l'autre.

4. Système d'assemblage selon la revendication 3,
dans lequel le mécanisme de robot parallèle (100) est en outre configuré pour tourner dans au moins l'une des trois directions suivantes : la première (X), la deuxième (Y) et la troisième (Z).

5. Système d'assemblage selon la revendication 4, dans lequel le mécanisme du robot en série (200) présente plusieurs degrés de liberté.

6. Système d'assemblage selon la revendication 5, dans lequel le mécanisme du robot en série (200) est configuré pour être un robot à plusieurs axes.

7. Système d'assemblage selon la revendication 1, comprenant en outre :
un mécanisme de transmission conçu pour la transmission d'une bande de matériau de borne (21) au mécanisme d'insertion (300) ; et
un mécanisme de coupe conçu pour découper la borne (20) de la bande de matériau de la borne (21), qui est transmise au mécanisme d'insertion (300).

8. Système d'assemblage selon la revendication 7,
dans lequel le mécanisme d'insertion (300) comprend un manipulateur conçu pour saisir la borne (20) découpée dans la bande de matériau de la borne (21) et insérer la borne saisie (20) dans le trou d'insertion du boîtier (10).

9. Système d'assemblage selon la revendication 7, dans lequel le mécanisme d'insertion (300) comprend :
un dispositif de fixation conçu pour saisir la borne (20) à insérer ; et
un mécanisme mobile conçu pour insérer la borne (20) dans le trou d'insertion du boîtier (10).

10. Système d'assemblage selon la revendication 7,
dans lequel le mécanisme d'insertion (300) comprend un mécanisme d'injection conçu pour injecter la borne (20) dans le trou d'insertion du boîtier (10).

11. Procédé d'assemblage d'une borne dans un boîtier, comprenant les étapes suivantes :
S100 : fournir un système d'assemblage selon la revendication 1 ;
S200 : maintenir le boîtier (10) sur la plate-forme de support (110) du mécanisme de robot parallèle (100) ;
S300 : maintenir la borne (20) à insérer sur le mécanisme d'insertion (300) ;
S400 : déplacer le mécanisme de robot parallèle (100) par le mécanisme de robot en série (200) jusqu'à ce que le trou d'insertion dans le boîtier (10) soit aligné avec la borne (20) à insérer ;
S500 : verrouiller au moins une partie des articulations (101) du mécanisme de robot parallèle (100), de sorte que le mécanisme de robot parallèle (100) et la plate-forme de support (110) restent immobiles ; et
S600 : insérer la borne (20) dans le trou d'insertion du boîtier (10) au moyen du mécanisme d'insertion (300).

12. Procédé selon la revendication 11,
dans lequel plusieurs bornes (20) doivent être insérées dans les trous d'insertion respectifs du boîtier (10), et
dans lequel le procédé comprend en outre les étapes suivantes :
S700 : déverrouiller au moins une partie des articulations (101) du mécanisme de robot parallèle (100), de sorte que le mécanisme de robot parallèle (100) et la plate-forme de support (110) soient mobiles ; et
S800 : répéter les étapes S300 à S700 jusqu'à ce que la pluralité de bornes (20) soit insérée dans le boîtier (10).
